Europäisches Patentamt

European Patent Office

Office européen des brevets

(19)

(11) Veröffentlichungsnummer : **0 447 770 B1**

# (12) EUROPÄISCHE PATENTSCHRIFT

(45) Veröffentlichungstag der Patentschrift :
**15.06.94 Patentblatt 94/24**

(51) Int. Cl.⁵ : **B60R 1/02**, B60R 1/06,
B60R 16/02, H01H 25/04

(21) Anmeldenummer : **91101259.9**

(22) Anmeldetag : **31.01.91**

(54) **Steuervorrichtung zur Handverstellung von reversierbaren elektrischen Verstelleinrichtungen.**

(30) Priorität : **17.03.90 DE 4008641**

(43) Veröffentlichungstag der Anmeldung :
**25.09.91 Patentblatt 91/39**

(45) Bekanntmachung des Hinweises auf die
Patenterteilung :
**15.06.94 Patentblatt 94/24**

(84) Benannte Vertragsstaaten :
**DE ES FR GB IT SE**

(56) Entgegenhaltungen :
**EP-A- 274 848**
**EP-A- 297 223**
**DE-A- 3 507 000**
**DE-A- 3 721 267**
**GB-A- 2 155 876**

(73) Patentinhaber : **MERCEDES-BENZ AG**
**Mercedesstrasse 136**
**D-70327 Stuttgart (DE)**

(72) Erfinder : **Krieg, Karl-Heinz**
**Schorndorfer Strasse 9**
**W-7333 Ebersbach (DE)**

## Beschreibung

Die Erfindung bezieht sich auf eine Steuervorrichtung zur Handverstellung von reversierbaren elektrischen Verstelleinrichtungen mit den Merkmalen des Oberbegriffs des Patentanspruchs 1. Eine gattungsgemäße Steuervorrichtung ist bekannt (DE 37 21 267 A1). Diese ermöglicht insbesondere die Handverstellung von drei elektrisch verstellbaren Kraftfahrzeug-Rückblickspiegeln mittels einer einzigen Schalterhandhabe einer Schalteranordnung, die sowohl zur Auswahl des zu verstellenden Spiegels als auch zu dessen eigentlicher Verstellung dient.

Die besonderen Vorteile dieser bekannten Anordnung sind, daß bei sinnfälliger Bedienbarkeit der Handhabe alle elektrischen Steuersignale in Form eines vierstelligen binären Codes von der Schalteranordnung über vier äußere elektrische Anschlußklemmen und eine vieladrige Leitung zu einer getrennt angeordneten elektronischen Decodier- und Steuerschaltung übertragen werden.

In der bekannten Steuervorrichtung ist in jeder Betätigungsstellung der Handhabe wenigstens einer der Festkontakte des Wahlschalters und damit wenigstens eine der beiden diesen Festkontakten nachgeschalteten äußeren Anschlußklemmen mit elektrischem Potential einer gemeinsamen Anschlußklemme der Schalteranordnung beaufschlagt.

Die Erfindung hat die Aufgabe, die gattungsgemäße Steuervorrichtung so auszubilden, daß noch wenigstens eine weitere Steuerfunktion damit ausgeführt werden kann.

Diese Aufgabe wird mit den kennzeichnenden Merkmalen des Patentanspruchs 1 erfindungsgemäß gelöst.

Der Wahlbereich der bekannten Handhabe wird gemäß der Erfindung über die vorhandenen Auswahlstellungen der Handhabe bzw. Schaltstellungen des Wahlschalters hinaus erweitert, wobei die Handhabe durch entsprechende Weiterbewegung - bei einer drehbaren Handhabe vorzugsweise durch Drehung um 180° ausgehend von einer bisherigen Mittelstellung - den vorhandenen Wahlschalter in eine zusätzliche stabile Schaltstellung schaltet und so die Steuerung mindestens einer weiteren Funktion wieder in gewohnter Weise - durch Kippen der Handhabe aus ihrer neutralen Ausgangsstellung - ermöglicht.

Im Gegensatz zur bekannten Steuervorrichtung bzw. Schalteranordnung sind in der zusätzlichen stabilen Schaltstellung des Wahlschalters dessen beide Festkontakte und die mit diesen fest verbundenen Anschlußklemmen der Schalteranordnung auch bei Betätigung der Handhabe potentialfrei, obwohl der mit dem Wahlschalter in Reihe geschaltete Tastschalter dem Schaltkontakt des Wahlschalters weiterhin in jeder von der Neutralstellung abweichenden Betätigungs- (z. B. Kipp-) Stellung der Handhabe das elektrische Potential der gemeinsamen Anschlußklemme zuleitet.

Der bei betätigter Handhabe vorliegende vierstellige Binärcode der bekannten Steuervorrichtung bzw. Schalteranordnung wird also erfindungsgemäß - ohne Hinzufügung weiterer Schalt- oder Festkontakte - um vier mögliche Kombinationen bzw. Permutationen erweitert, von denen allerdings eine der "Null-Permutation" in der neutralen Stellung der Handhabe entspricht und nicht für Steuerungszwecke verwendbar ist. Mithin können aber bei der Betätigung der Handhabe aus der zusätzlichen - vierten - Auswahlstellung hinaus über die beiden anderen Anschlußklemmen noch drei von den bisher möglichen Permutationen unterscheidbare Signale übertragen werden.

Die kennzeichnenden Merkmale der Unteransprüche offenbaren vorteilhafte Weiterbildungen der erfindungsgemäßen Steuervorrichtung.

Die hinzugewonnene Funktion kann vorzugsweise zum fernbedienten Anlegen bzw. Abklappen der beiden zu diesem Zweck mit je einer weiteren reversierbaren Verstelleinrichtung versehenen Außenrückblickspiegel ausgenutzt werden. Zur Steuerung dieser Funktion sind mindestens zwei der drei zusätzlichen Permutationen anzusetzen. Sie ist z. B. in Waschanlagen oder in engen Toreinfahrten zur Vermeidung von Schäden an den über den Grundriß des Fahrzeugs herausragenden Außenrückblickspiegeln von Nutzen. Entsprechend ausgestattete Außenrückblickspiegel sind bekannt (DE 38 19 471 A1).

Es ist auch eine Verstelleinrichtung für Kraftfahrzeug-Rückblickspiegel bekannt (DE 35 07 000 A1), mit der neben den üblichen Feinverstellungen der mittels einer separaten Schalterhandhabe anwählbaren Außenrückblickspiegel auch deren über einen eigenen Elektromotor bewirkbares Anlegen und Abklappen steuerbar ist; allerdings sind auch für letztere Vorgänge zwei eigene Schalterhandhaben vorgesehen, und die verwendete elektrische Steuerung ist konventioneller Art.

Es sind ferner bereits Außenrückblickspiegel für Kraftfahrzeuge bekannt (DE 38 05 354 C1, DE 87 16 486.3 U1), bei denen eine der zur Feinverstellung ohnehin vorgesehenen beiden Verstelleinrichtungen auch zum Anlegen und Wiederabklappen des Spiegelgehäuses verwendet werden kann. Jedoch sind diese Verstelleinrichtungen in der Regel ziemlich langsam, weil eine genaue Positionierung der Spiegelfläche im Verhältnis zum Augenpunkt des Fahrzeugführers ermöglicht werden soll. Für den Zweck des Anlegens und Wiederabklappens des gesamten Spiegels - was zur Vermeidung unerwünschter Wartezeiten schnell vonstatten gehen soll - erscheinen derartige Verstelleinrichtungen daher an sich weniger geeignet.

Allerdings ist in der zweitgenannten Druckschrift offenbart, daß eine Steuerzentrale eine Änderung der Drehgeschwindigkeit des Motors 53 in Abhängigkeit von der gewünschten Verstellung (Feinverstellung oder Anlegen/Abklappen) ermöglicht. Nicht näher offenbart ist jedoch die Schalteranordnung, mit der die Verstellung und die Geschwindigkeitsumschaltung gesteuert werden soll.

Nach einer vorteilhaften Ausgestaltung der Erfindung können die zusätzlichen Permutationen des Binärcodes selektiv eingesetzt werden, so daß bei Betätigung der in der vierten Wahlstellung stehenden Handhabe in der einen Richtung der eine und bei Betätigung der Handhabe in der anderen, entgegengesetzten Richtung der andere Außenrückblickspiegel angeklappt wird, wobei natürlich bei einer seitlich beweg- bzw. kippbaren Handhabe die sinnfällige Betätigungsrichtung möglichst beizubehalten ist - d. h. "nach rechts" bzw. "nach links bewegen" wird in der zusätzlichen Schaltstellung des Wahlschalters bzw. der Handhabe durch die Decodier- und Steuerschaltung in "Anklappen rechts" bzw. "Anklappen links" umgesetzt.

In einer solchen Konstellation wird die dritte zusätzliche Permutation zweckmäßig zum Wiederabklappen beider Außenrückblickspiegel verwendet, wobei natürlich nur eine entsprechende Verstelleinrichtung eines vorher bereits angeklappten Außenrückblickspiegels aktiviert wird.

Die dritte zusätzliche Permutation kann aber auch - wenn beide Außenrückblickspiegel unter Ausnutzung nur zweier der zusätzlichen Permutationen immer gemeinsam angelegt und abgeklappt werden sollen - in vorteilhafter Weise dazu verwendet werden, eine in der Steuervorrichtung vorgesehene Spiegelstellungs-Speicherschaltung zur Einspeicherung einer unmittelbar zuvor eingestellten Spiegelstellung zu veranlassen. Dabei dient die "Unbequemlichkeit" der vorherigen Verstellung der Handhabe in die vierte Wahlstellung dazu, ungewolltes Überspeichern bereits eingespeicherter Spiegelstellungen weitestgehend zu verhindern, was mit den üblichen separaten Speichertasten ohne weiteres einmal geschehen kann. Die gespeicherten Spiegelstellungen können in an sich bekannter Weise über eine separate Taste abgerufen werden.

Bei mehreren vorhandenen Speicherplätzen für Spiegelstellungen - die oft im Hinblick auf häufigen Benutzerwechsel angeboten werden - werden die vorhandenen "Speicher"-Tasten nur noch zur Vorauswahl des Speicherplatzes und zum Abruf von dessen Inhalt weiterverwendet, während die eigentliche Einspeicherung nur mittels der Verstell-Handhabe vorgenommen werden kann, die damit eine Quittierfunktion erhält.

Es versteht sich, daß die Schalteranordnung der erfindungsgemäßen Steuervorrichtung, deren mechanischer Aufbau dem der gattungsbildenden Schalteranordnung weitgehend entspricht, auch alle deren andere Vorteile enthält, insbesondere also deren sinnfällige Bedienbarkeit bei der Spiegelauswahl, die ergonomische Gestaltung der Handhabe sowie deren Beleuchtbarkeit.

Weitere Einzelheiten und Vorteile gehen aus der Zeichnung eines Ausführungsbeispiels und deren sich hier anschließender eingehender Beschreibung hervor.

Es zeigen

Figur 1    eine Ansicht der Schalteranordnung der erfindungsgemäßen Steuervorrichtung und

Figur 2    ein Schaltschema der erfindungsgemäßen Steuervorrichtung.

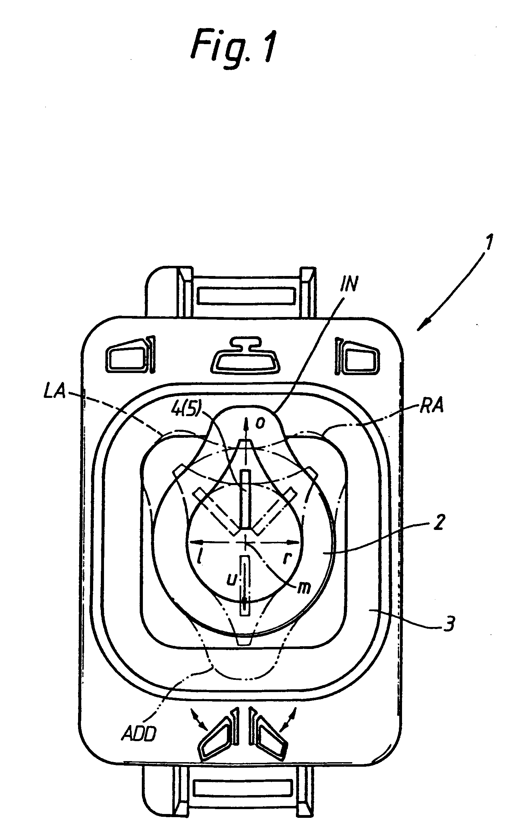

In **Figur 1** ist eine Schalteranordnung 1 mit einer Handhabe 2 versehen, die gegenüber einem Sockel 3 um eine Achse m - die senkrecht zur Zeichnungsebene verlaufende Längs- bzw. Hochachse der Handhabe 1 - in vier stabile Schaltstellungen IN (durchgezogen), LA (gestrichelt), RA (strichpunktiert) und ADD (Strich-Doppelpunkt-Linien) drehbar und ausgehend von jeder dieser stabilen Schaltstellungen aus der Achse m in durch Pfeile angedeutete Kipprichtungen o - u und l - r kippbar gelagert ist, die wie z. B. bei einem Computer-Joystick in zwei senkrecht aufeinander stehenden Ebenen liegen.

Die damit bewirkbaren Verstellungen der Spiegel und der elektrische Anschluß der Schalteranordnung sind nicht Gegenstand der Erfindung. Sie wurden bereits in der gattungsbildenden Druckschrift ausführlich beschrieben, so daß hier nicht näher darauf eingegangen zu werden braucht. Es sei nur bemerkt, daß die jeweils aktivierte Spiegelverstellung in bekannter Weise sinnfällig der Betätigungsrichtung der Handhabe entspricht.

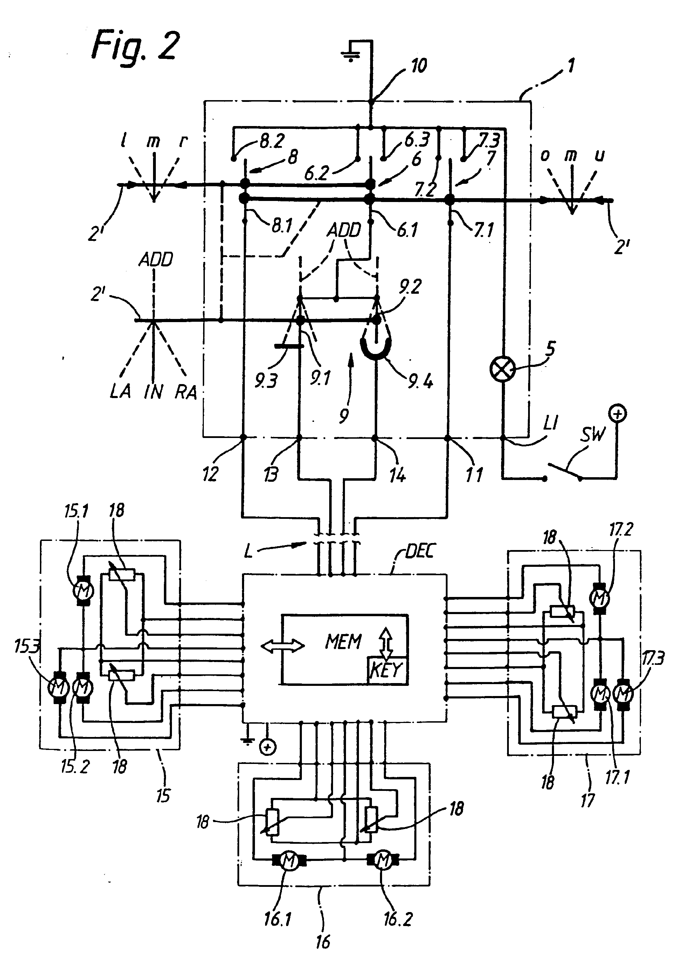

Die Handhabe 2 ist ergonomisch sinnvoll zeigerförmig ausgebildet, damit ihre jeweilige Schaltstellung - die einer der stabilen Schaltstellungen des mitdrehbaren Wahlschalters 9 (Figur 2) entspricht - auch ohne Hinsehen erfühlt werden kann.

Ferner ist in der oberen Fläche der Handhabe 2 ein längliches Fensterfeld 4 vorgesehen, das durch eine Lichtquelle 5 (Figur 2) z. B. nach Einschalten des Fahrzeugstandlichts beleuchtet wird und die Schaltstellung der Handhabe auch bei Dunkelheit optisch markiert.

Die Schaltstellung ADD liegt der (mittleren) Schaltstellung IN gegenüber; die Handhabe 2 muß um 180° aus der mittleren Schaltstellung herausgedreht werden, um die Stellung ADD zu erreichen. Ihr Drehsinn ist dabei unerheblich. Es kann aber aus Gründen der nicht dargestellten Schaltermechanik erforderlich sein, nur eine Drehrichtung zuzulassen.

In den Schaltstellungen RA bzw. LA stehen der Handhabe 2 jeweils ein Symbol für den jeweiligen Außenrückblickspiegel (rechts bzw. links) gegenüber, in der Schaltstellung IN zeigt sie auf ein Symbol für einen Innenrückblickspiegel. Der Schaltstellung ADD sind zwei Symbole für beide Außenrückblickspiegel zugeordnet, wobei zusätzliche Pfeile andeuten, daß beide Außenrückblickspiegel in dieser stabilen Schaltstellung des Wahlschalters bzw. der Handhabe durch deren Kippen nach oben/vorn bzw. unten/hinten in ihrer Gesamtheit an die Fahrzeugkarosserie angelegt bzw. wieder von dieser abgeklappt werden können.

Das Schaltschema in **Figur 2** zeigt das "Innenleben" der Schalteranordnung, welches sich weitgehend an jenes der gattungsbildenden Schalteranordnung anlehnt.

Sie enthält neben der bereits erwähnten Lichtquelle 5

- einen ersten, als Wechseltaster ausgeführten Tastschalter 6 mit einem Schaltkontakt 6.1, einem ersten Festkontakt 6.2 und einem zweiten Festkontakt 6.3,
- einen zweiten, ebenfalls als Wechseltaster ausgeführten Tastschalter 7 mit einem Schaltkontakt 7.1, einem ersten Festkontakt 7.2 und einem zweiten Festkontakt 7.3,
wobei der erste und der zweite Tastschalter 6 und 7 in der neutralen Mittelstellung ihres jeweiligen Schaltkontaktes 6.1 bzw. 7.1 dargestellt sind,
- einen dritten, als einpoligen Taster ausgeführten Tastschalter 8 mit einem Schaltkontakt 8.1, der in seiner geöffneten Stellung gezeichnet ist, und mit einem einzigen Festkontakt 8.2,
- einen Wahlschalter 9 mit einem in zwei mechanisch fest miteinander gekuppelte Kontaktstücke 9.1 und 9.2 unterteilten Schaltkontakt und zwei Festkontakten 9.3 und 9.4.

An der Schalteranordnung sind sechs äußere Anschlußklemmen vorgesehen.

Eine erste Anschlußklemme 10 ist mit sämtlichen Festkontakten 6.2, 6.3, 7.2, 7.3 und 8.2 der Tastschalter 6, 7 und 8 fest verbunden und ist ihrerseits z. B. an Massepotential einer Bordspannungsquelle angeschlossen.

Eine zweite Anschlußklemme 11 ist mit dem Schaltkontakt 7.1 des Tastschalters 7 fest verbunden.

Eine dritte Anschlußklemme 12 ist mit dem Schaltkontakt 8.1 des Tastschalters 8 fest verbunden.

Eine vierte Anschlußklemme 13 ist mit dem Festkontakt 9.3 des Wahlschalters 9 fest verbunden.

Eine fünfte Anschlußklemme 14 ist mit dem Festkontakt 9.4 des Wahlschalters 9 fest verbunden.

Eine sechste Anschlußklemme LI ist mit der Lichtquelle 5 fest verbunden und anderseitig an einen Lichtschalter SW angeschlossen, über welchen die Lichtquelle 5 eingeschaltet werden kann. Der Lichtschalter SW wird vorzugsweise der Standlichtschalter des Fahrzeugs sein.

Alle erwähnten Schalter 6 bis 9 sind in der Stellung gezeichnet, die sie einnehmen, wenn die Handhabe 2 unbetätigt in der Wahlstellung IN steht. Alle Schaltkontakte der Tastschalter 6 bis 8 sind dann ersichtlich potentialfrei. Die gestrichelten Verbindungslinien zwischen den der Übersichtlichkeit halber drei dargestellten "Teil-"Handhaben 2' deuten symbolisch deren tatsächliche Vereinigung in der einzigen, in Figur 1 gezeigten Handhabe 2 an. Gegeneinander weisende Pfeilspitzen auf den Enden der Handhaben 2' deuten an, daß die Handhabe 2 nach Auslenkungen in den entsprechenden Richtungen durch Federn oder dergleichen in die gezeigte Stellung zurückgestellt wird.

Durch **Drehen** der Handhabe 2 um ihre Längsachse m wird der Wahlschalter 9 bzw. dessen Schaltkontakt zwischen seinen Stellungen IN, RA, LA und ADD umgeschaltet.

In Stellung IN liegt nur sein Kontaktstück 9.1 am Festkontakt 9.3 an, und sein Kontaktstück 9.2 steht frei.

In Stellung LA liegt sein Kontaktstück 9.1 ebenfalls am Festkontakt 9.3 an, und sein Kontaktstück 9.2 liegt am Festkontakt 9.4 an.

In Stellung RA steht sein Kontaktstück 9.1 frei, und sein Kontaktstück 9.2 liegt wiederum am Festkontakt 9.4 an.

In Stellung ADD stehen beide Kontaktstücke 9.1, 9.2 des Wahlschalters 9 frei; zur Verdeutlichung ist der gestrichelten Darstellung der Kontaktstücke in dieser Stellung noch einmal das Bezugszeichen ADD zugeordnet.

Durch **Kippen** der Handhabe 2 aus ihrer Längsachse m (vgl. Fig. 1)

- in Richtung **o** wird der Schaltkontakt 6.1 an den Festkontakt 6.2, der Schaltkontakt 7.1 an den Festkontakt 7.2 und der Schaltkontakt 8.1 an den Festkontakt 8.2 angelegt;
- in Richtung **u** wird der Schaltkontakt 6.1 an den Festkontakt 6.3 und der Schaltkontakt 7.1 an den Festkontakt 7.3 angelegt, während der Schaltkontakt 8.1 potentialfrei bleibt;
- in Richtung **r** bleibt der Schaltkontakt 7.1 unbetätigt und daher potentialfrei, während der Schaltkontakt 6.1 an den Festkontakt 6.3 angelegt wird und der Schaltkontakt 8.1 wiederum potentialfrei bleibt;
- in Richtung **I** bleibt der Schaltkontakt 7.1 ebenfalls unbetätigt und daher potentialfrei, während der Schaltkontakt 6.1 an den Festkontakt 6.2 und der Schaltkontakt 8.1 an den Schaltkontakt 8.2 angelegt wird.

An die Anschlußklemmen 11 bis 14 ist eine vieradrige Leitung L zur Übertragung des an diesen Klemmen vorliegenden Binärcodes zu einer Decodier- und Steuerschaltung DEC angeschlossen. Diese wiederum ist ein Teil einer Spiegelstellungs-Speicherschaltung MEM, die ihrerseits mit einem in Reichweite des Benutzers angeordneten Tastenfeld KEY verbunden ist. Der in beiden Richtungen notwendige Datentransfer zwischen DEC und MEM - der insbesondere aus elektrischen Spiegelstellungssignalen besteht - ist durch einen Doppelpfeil angedeutet. DEC enthält die Schaltungen zur Umsetzung des Binärcodes in Stellsignale und sämtliche Leistungsendstufen / Motortreiber, während in MEM die Spiegelstellungen elektrisch speicherbar sind und auf Tastendruck über KEY abrufbar sind, wie bereits erwähnt.

Zwei Außenrückblickspiegel 15 und 17 sowie ein Innenrückblickspiegel 16 weisen je zwei Feinverstelleinrichtungen 15.1, 15.2 und 17.1, 17.2 sowie 16.1 und 16.2 auf, außerdem elektrische Stellungsgeber, z. B. Potentiometer-Weg- oder Winkelgeber 18 auf, welche allesamt an die Decodier- und Steuerschaltung DEC in bekannter Weise angeschlossen sind. Die Anordnung entspricht insoweit der gattungsbildenden Steuervorrichtung und wird daher hier nicht näher erläutert.

Zusätzlich weisen die beiden Außenrückblickspiegel 15 und 17 noch je eine weitere Verstelleinrichtung 15.3 bzw. 17.3 auf, die in nicht näher dargestellter Weise zum Anlegen und Wiederabklappen dieser Spiegel an die bzw. von der Karosserie des Kraftfahrzeuges vorgesehen und ebenfalls über die Decodier- und Steuerschaltung DEC steuerbar sind.

An den vier Anschlußklemmen 11, 12, 13 und 14 der Schalteranordnung ergeben sich bei Betätigung der Handhabe 2 die aus der folgenden Tabelle ersichtlichen Signalpermutationen des bereits mehrfach erwähnten, der Decodier- und Steuerschaltung DEC über die Leitung L zuzuführenden vierstelligen Binärcodes, wobei zur Verdeutlichung "kein Potential" durch (logisch) "0" und "Potential der gemeinsamen Anschlußklemme 10" durch (logisch) "1" symbolisiert ist:

| Stellung der Handhabe: | | | | | | Anschlußklemme: | | | |
| | | | | | | (Tastschalter 7, 8) | | (Wahlschalter 9) | |
| | | | | | | 11 | 12 | 13 | 14 |
|---|---|---|---|---|---|---|---|---|---|
| LA | IN | RA | ADD | / | m | 0 | 0 | 0 | 0 |
| LA | ---- | ---- | --- | / | o | 1 | 1 | 1 | 1 |
| | | | | / | u | 1 | 0 | 1 | 1 |
| | | | | / | r | 0 | 0 | 1 | 1 |
| | | | | / | l | 0 | 1 | 1 | 1 |
| --- | IN | ---- | --- | / | o | 1 | 1 | 1 | 0 |
| | | | | / | u | 1 | 0 | 1 | 0 |
| | | | | / | r | 0 | 0 | 1 | 0 |
| | | | | / | l | 0 | 1 | 1 | 0 |
| --- | ---- | RA | --- | / | o | 1 | 1 | 0 | 1 |
| | | | | / | u | 1 | 0 | 0 | 1 |
| | | | | / | r | 0 | 0 | 0 | 1 |
| | | | | / | l | 0 | 1 | 0 | 1 |
| --- | ---- | ---- | ADD | / | o | 1 | 1 | 0 | 0 |
| | | | | / | u | 1 | 0 | 0 | 0 |
| | | | | / | r | 0 | 0 <--LEER --> | 0 | 0 |
| | | | | / | l | 0 | 1 | 0 | 0 |

Zusätzlich ist die Stellung "ADD / r" als LEER-Stellung gekennzeichnet, weil sich dort, wie bereits erwähnt und oben ersichtlich, bei Betätigung der Handhabe in entsprechende Richtung dieselbe Code"null"permutation wie bei in neutraler oder Ruhestellung stehender Handhabe ergibt.

Die beiden dem Wahlschalter nachgeschalteten Anschlußklemmen 13 und 14 stellen im Binärcode Adreß-Informationen oder Adreß-Bits zur Verfügung, nach welchen der zu verstellende Spiegel bzw. die zusätzliche, überlagerte Funktion ausgewählt wird. Die regelmäßig permutierbaren Bits an den Klemmen 11 und 12 bezeichnen die auszuführende Funktion selbst, also Spiegel um horizontale bzw. vertikale Achse hin bzw. her schwenken.

Aus der vorstehenden Tabelle ergibt sich, daß neben den bekannten Feinverstellvorgängen in Wahlstellungen IN, RA und LA in der zusätzlichen Wahlstellung ADD drei weitere unterscheidbare Binärcode-Permutationen, ADD/o, ADD/u und ADD/l, zur Verfügung stehen. Die Zuordnung dieser Permutationen zu diesen Bewegungsrichtungen der Handhabe sind selbstverständlich durch andere Auslegung der Tastschalter veränderbar; so könnte z. B., wie auch eingangs bereits erwähnt, die LEER-Permutation bei ADD/o oder ADD/u eintreten, während ADD/r und ADD/l zum jeweils einzelnen Anlegen der Außenrückblickspiegel und die Permutation bei ADD/u oder ADD/o zum gemeinsamen Abklappen der Außenrückblickspiegel verwendbar wäre.

Um dem Benutzer beim Anlegen und Abklappen der Außenrückblickspiegel das Festhalten der Handhabe zu ersparen, kann die Decodier- und Steuerschaltung DEC noch eine - nicht näher dargestellte - Selbsthalteschaltung aufweisen, die durch Betätigung der Handhabe 2 in den entsprechenden Richtungen (ADD/o, ADD/u) ein- und durch mit den Verstelleinrichtungen 15.3 und 17.3 in bekannter Weise mechanisch gekuppelte, nicht dargestellte Endlagenschalter nach Abschluß des Anlege- bzw. Abklappvorgangs wieder ausgeschaltet wird.

**Patentansprüche**

1. Steuervorrichtung zur Handverstellung von reversierbaren elektrischen Verstelleinrichtungen insbesondere von Kraftfahrzeug-Rückblickspiegeln (15,16,17)
   mit einer Schalteranordnung (1) aus einem mittels einer Handhabe (2) schaltbaren Wahlschalter (9),
   dessen Schaltkontakt (9.1,9.2) in einer ersten stabilen Schaltstellung an einem ersten Festkontakt (9.3) anliegt,
   dessen Schaltkontakt (9.1,9.2) in einer zweiten stabilen Schaltstellung an einem zweiten Festkontakt (9.4) anliegt,
   dessen Schaltkontakt (9.1,9.2) in einer dritten stabilen Schaltstellung an dem ersten (9.3) und dem zweiten Festkontakt (9.4) anliegt,
   - wobei jeder der beiden Festkontakte (9.3,9.4) des Wahlschalters (9) mit genau einer (ersten bzw. zweiten) äußeren Anschlußklemme (13,14) der Schalteranordnung (1) fest verbunden ist,
   mit einem ersten Tastschalter (6) und zwei weiteren Tastschaltern, (7,8) die jeweils durch Betätigung derselben Handhabe (2) aus einer neutralen Stellung heraus in instabile Schaltstellungen (o,u,l,r) schaltbar sind,
       wobei
   - alle Festkontakte (6.2,6.3;7.2,7.3;8.2) der drei Tastschalter (6,7,8) mit einer gemeinsamen äußeren Anschlußklemme (10) fest verbunden sind,
   - der Schaltkontakt (6.1) des ersten Tastschalters (6) mit dem Schaltkontakt (9.1,9.2) des Wahlschalters (9) elektrisch in Reihe geschaltet ist und diesen in jeder Betätigungsstellung der Handhabe (2) mit dem elektrischen Potential der gemeinsamen Anschlußklemme (10) verbindet,
   - der Schaltkontakt (7.1) des zweiten (7) und der Schaltkontakt (8.1) des dritten Tastschalters (8) jeweils fest mit einer (dritten bzw. vierten) äußeren Anschlußklemme (11,12) der Schalteranordnung (1) verbunden ist und
   - ein von der eingestellten stabilen Schaltstellung (IN,LA,RA,ADD) des Wahlschalters (9) und den durch Betätigen der Handhabe (2) veränderlichen Schaltstellungen der Tastschalter (6,7,8) abhängiger, vierstelliger Binärcode mit mindestens zwölf Permutationen - und mit den Stellenwerten "kein Potential" und "Potential der gemeinsamen Anschlußklemme" - an die erste bis vierte äußere Anschlußklemme (13,14,11,12) anlegbar ist,
   **gekennzeichnet durch**
   eine vierte mittels der Handhabe (2) einschaltbare stabile Schaltstellung (ADD) des Wahlschalters (9), in welcher dessen Schaltkontakt (9.1, 9.2) an keinem der zugeordneten Festkontakte (9.3, 9.4) anliegt, so daß die zugeordnete erste (13) und zweite Anschlußklemme (14) auch beim Betätigen der Handhabe (2) potentialfrei bleibt.

2. Steuervorrichtung nach Anspruch 1, in welcher die stabilen Schaltstellungen (IN,LA,RA,ADD) des Wahlschalters (9) durch Drehen der Handhabe (2) um deren Längsachse (m) einschaltbar sind,
**gekennzeichnet durch**
Anordnung der vierten Schaltstellung (ADD) des Wahlschalters (9) bzw. der Handhabe (2) außerhalb deren die drei anderen Schaltstellungen (LA, IN, RA) überdeckenden Drehbereichs.

3. Steuervorrichtung nach Anspruch 2, in welcher der Wahlschalter (9) eine mittlere stabile Schaltstellung (IN) zur Auswahl eines zu verstellenden Spiegels aufweist,
**gekennzeichnet durch**
um 180° gegenüber der mittleren Schaltstellung (IN) versetzte Anordnung der vierten Schaltstellung (ADD) des Wahlschalters (9) bzw. der Handhabe (2).

4. Steuervorrichtung nach Anspruch 1, 2 oder 3, mit welcher die Verstelleinrichtungen wenigstens eines Außenrückblickspiegels (15,17) des Kraftfahrzeugs über eine an die Anschlußklemmen der Schalteranordnung (1) angeschlossene Decodier- und Steuerschaltung (DEC) für die Spiegelverstellung steuerbar sind,
**gekennzeichnet durch**
Ansteuerung einer zusätzlichen Verstelleinrichtung (15.3, 17.3) des wenigstens einen Außenrückblickspiegels (15, 17) zum Anlegen bzw. Abklappen wenigstens dieses Außenrückblickspiegels (15, 17) an die bzw. von der Karosserie des Kraftfahrzeugs bei Betätigung der in die vierte Schaltstellung (ADD) geschalteten Handhabe (2) in Abhängigkeit von deren Betätigungsrichtung (o, u).

5. Steuervorrichtung nach Anspruch 4,
**gekennzeichnet durch**
Ansteuerung der zusätzlichen Verstelleinrichtung (15.3) zum Anlegen des einen Außenrückblickspiegels (15) bei Betätigung der in die vierte Schaltstellung (ADD) geschalteten Handhabe (2) in einer Betätigungsrichtung (o),
Ansteuerung der zusätzlichen Verstelleinrichtung (17.3) zum Anlegen des anderen Außenrückblickspiegels (17) bei Betätigung der in die vierte Schaltstellung (ADD) geschalteten Handhabe (2) in einer anderen Betätigungsrichtung (u) und
Ansteuerung der zusätzlichen Verstelleinrichtungen (15.3, 17.3) zum Abklappen beider Außenrückblickspiegel (15, 17) von der Karosserie des Kraftfahrzeugs bei Betätigung der in die vierte Schaltstellung (ADD) geschalteten Handhabe (2) in einer dritten Betätigungsrichtung (r).

6. Steuervorrichtung nach einem der Ansprüche 1 bis 4, in welcher eine an die Anschlußklemmen der Schalteranordnung (1) angeschlossene Decodier- und Steuerschaltung (DEC) für die Spiegelverstellung ein Teil einer Spiegelstellungs-Speicherschaltung (Memory) ist,
**gekennzeichnet durch**
Einspeicherung einer zuvor mittels der Handhabe (2) eingestellten und elektrisch durch Stellungsgeber (18) erfaßten Spiegelstellung in die Speicherschaltung (MEM) nur bei Betätigung der hernach in die vierte Schaltstellung (ADD) umgeschalteten Handhabe (2) in einer vorgegebenen Richtung (r), wobei eine Auswahl des zu belegenden Speicherplatzes in der Speicherschaltung (MEM) über eine separate Tastatur (KEY) erfolgt.

7. Steuervorrichtung nach einem der vorstehenden Ansprüche mit einer in Zeigerform ausgebildeten Handhabe (2).

8. Steuervorrichtung nach einem der vorstehenden Ansprüche mit einem in der Handhabe (2) angeordneten, durch eine Lichtquelle (5) beleuchtbaren Symbol (4) für deren Stellung.

## Claims

1. Control device for the manual adjustment of reversible electrical adjusting devices, in particular of motor vehicle rear-view mirrors (15, 16, 17),
having a switch arrangement (1) comprising a selector switch (9) which can be switched by means of a grip (2) and of which
the switching contact (9.1, 9.2) is, in a first stable switching position, in contact with a first fixed contact (9.3),
the switching contact (9.1, 9.2) is, in a second stable switching position, in contact with a second fixed contact (9.4),

the switching contact (9.1, 9.2) is, in a third stable switching position, in contact with the first (9.3) and the second (9.4) fixed contacts,

    - each of the two fixed contacts (9.3, 9.4) of the selector switch (9) being firmly connected to precisely one (first or second) outer connection terminal (13, 14) of the switch arrangement (1),

having a first tip switch (6) and two further tip switches (7, 8), which can in each case be switched out of a neutral position into unstable switching positions (o, u, l, r) by actuating the same grip (2), wherein

- all the fixed contacts (6.2, 6.3; 7.2, 7.3; 8.2) of the three tip switches (6, 7, 8) are firmly connected to a joint outer connection terminal (10),
- the switching contact (6.1) of the first tip switch (6) is connected electrically in series with the switching contact (9.1, 9.2) of the selector switch (9) and connects the latter to the electric potential of the joint connection terminal (10) in every actuating position of the grip (2),
- the switching contact (7.1) of the second tip switch (7) and the switching contact (8.1) of the third tip switch (8) are in each case firmly connected to a (third and fourth, respectively) outer connection terminal (11, 12) of the switch arrangement (1) and
- a four-digit binary code, which is dependent on the set stable switching position (IN, LA, RA, ADD) of the selector switch (9) and the switching positions of the tip switches (6, 7, 8) which can be changed by actuating the grip (2), has at least twelve permutations - and has the place values "no potential" and "potential of the joint connection terminal" - can be applied to the first to fourth outer connection terminal (13, 14, 11, 12),

characterised by

a fourth stable switching position (ADD) of the selector switch (9), which can be switched into by means of the grip (2) and in which the switching contact (9.1, 9.2) of the said selector switch is not in contact with any of the assigned fixed contacts (9.3, 9.4), so that the assigned first connection terminal (13) and second connection terminal (14) remain potential-free even when the grip (2) is actuated.

2.     Control device according to Claim 1, in which the stable switching positions (IN, LA, RA, ADD) of the selector switch (9) can be switched into by turning the grip (2) about its longitudinal axis (m), characterised by arrangement of the fourth switching position (ADD) of the selector switch (9) or of the grip (2) outside its turning range covering the three other switching positions (LA, IN, RA).

3.     Control device according to Claim 2, in which the selector switch (9) has a central stable switching position (IN) for selection of a mirror to be adjusted, characterised by arrangement of the fourth switching position (ADD) of the selector switch (9) or of the grip (2) offset by 180° with respect to the central switching position (IN).

4.     Control device according to Claim 1, 2 or 3, with which the adjusting devices of at least one outside rear-view mirror (15, 17) of the motor vehicle can be controlled for mirror adjustment by means of a decoding and control circuit (DEC) connected to the connection terminals of the switch arrangement (1), characterised by activation of an additional adjusting device (15.3, 17.3) of the at least one outside rear-view mirror (15, 17) for bringing in or swinging out at least this outside rear-view mirror (15, 17) against or away from the body of the motor vehicle upon actuation of the grip (2) switched into the fourth switching position (ADD), dependent on its actuating direction (o, u).

5.     Control device according to Claim 4, characterised by activation of the additional adjusting device (15.3) for bringing in the one outside rear-view mirror (15) when the grip (2) switched into the fourth switching position (ADD) is actuated in one actuating direction (o), activation of the additional adjusting device (17.3) for bringing in the other outside rear-view mirror (17) when the grip (2) switched into the fourth switching position (ADD) is actuated in another actuating direction (u) and activation of the additional adjusting devices (15.3, 17.3) for swinging out both outside rear-view mirrors (15, 17) away from the body of the motor vehicle when the grip (2) switched into the fourth switching position (ADD) is actuated in a third actuating direction (r).

6.     Control device according to one of Claims 1 to 4, in which a decoding and control circuit (DEC) for mirror adjustment, connected to the connection terminals of the switch arrangement (1), is part of a mirror-position memory circuit (memory), characterised by storing a mirror position set beforehand by means of the grip (2) and electrically detected by position sensors (18) in the memory circuit (MEM) just by actuating the grip (2), changed over thereafter into the fourth switching position (ADD) in a predetermined direction (r), a selection of the memory location to be occupied in the memory circuit (MEM) being performed by means of a separate keypad (KEY).

7. Control device according to one of the preceding claims, having a grip (2) designed in pointer form.

8. Control device according to one of the preceding claims, having a symbol (4) arranged in the grip (2), for its position, and able to be illuminated by a light source (5).

**Revendications**

1. Système de commande pour le réglage manuel de dispositifs électriques de réglage réversibles, notamment de rétroviseurs (15,16,17) de véhicules, comprenant un ensemble de commutateurs (1) comportant
   - un commutateur-sélecteur (9) pouvant être actionné à l'aide d'une poignée (2),
     . dont le contact de commutation (9.1,9.2) s'applique, dans une première position de commutation stable, contre un premier contact fixe (9.3),
     . dont le contact de commutation (9.1,9.2) s'applique, dans une deuxième position de commutation stable, contre un second contact fixe (9.4),
     . dont le contact de commutation (9.1,9.2) s'applique, dans une troisième position de commutation stable, contre le premier (9.3) et le second contact fixe (9.4),
   - chacun des deux contacts fixes (9.3,9.4) du commutateur-sélecteur (9) étant relié rigidement avec précisément une (première ou seconde) borne extérieure de connexion de l'ensemble de commutateurs (1),
   - un premier commutateur tactile (6) et deux autres commutateurs tactiles (7,8), qui peuvent chacun être commutés, par actionnement de la même poignée (2), d'une position neutre jusque dans des positions de commutation instables (o,u,l,r),
   - tous les contacts fixes (6.2,6.3;7.2,7.3;8.2) des trois commutateurs tactiles (6,7,8) étant reliés rigidement à une borne extérieure de connexion commune (10),
   - le contact de commutation (6.1) du premier commutateur tactile (6) étant commandé électriquement en série avec le contact de commutation (9.1,9.2) du commutateur-sélecteur (9) et soumettant celui-ci, dans chaque position d'actionnement de la poignée (2), au potentiel électrique de la borne de connexion commune (10),
   - le contact de commutation (7.1) du second commutateur tactile (7) et le contact de commutation (8.1) du troisième commutateur tactile (8) sont respectivement reliés rigidement à une (troisième ou quatrième) borne extérieure de connexion (11,12) de l'ensemble de commutateurs (1) et
   - un code binaire à quatre positions, dépendant de la position de commutation stable réglée (IN,LA,RA,ADD) du commutateur-sélecteur (9) et des positions de commutation, modifiables par actionnement de la poignée (2), des commutateurs tactiles (6,7,8), peut être appliqué avec au moins douze permutations - et avec les désignations de positions "pas de potentiel" et "potentiel de la borne de connexion commune" - à la première jusqu'à la quatrième borne extérieure de connexion (13,14,11,12), caractérisé par une quatrième position de commutation stable (ADD) du commutateur-sélecteur (9) pouvant être établie à l'aide de la poignée (2) et dans laquelle son contact de commutation (9.1,9.2) ne s'applique pas contre un des contacts fixes associés (9.3,9.4) de sorte que la première (13) et la seconde (14) bornes de connexion restent exemptes de potentiel également lors de l'actionnement de la poignée (2).

2. Système de commande selon la revendication 1, dans lequel les positions de commutation stables (IN,LA,RA,ADD) du commutateur-sélecteur (9) peuvent être établies par rotation de la poignée (2) autour de son axe longitudinal (m), caractérisé par une disposition de la quatrième position de commutation (ADD) du commutateur-sélecteur (9) ou de la poignée (2) à l'extérieur de leur zone de rotation recouvrant les trois autres positions de commutation (LA,IN,RA).

3. Système de commande selon la revendication 2. dans lequel le commutateur-sélecteur (9) comporte une position de commutation stable centrale (IN) pour le choix d'un rétroviseur à régler, caractérisé par une disposition, décalée de 180° par rapport à la position de commutation centrale (IN), de la quatrième position de commutation (ADD) du commutateur-sélecteur (9) ou de la poignée (2).

4. Système de commande selon la revendication 1, 2 ou 3, à l'aide duquel les dispositifs de réglage d'au moins un rétroviseur extérieur (15,17) du véhicule peuvent être commandés pour le réglage de rétroviseur par l'intermédiaire d'un circuit de décodage et de commande (DEC) relié aux bornes de connexion de l'ensemble de commutateurs (1), caractérisé par une activation d'un dispositif de réglage additionnel (15.3,17.3) d'au moins un des rétroviseurs extérieurs en question (15,17) en vue d'un rabattement ou d'un écartement d'au moins ce rétroviseur extérieur (15,17) par rapport à la carrosserie du véhicule lors d'un actionnement de la poignée (2) amenée dans la quatrième position de commutation (ADD) en fonction de son sens d'actionnement (o,u).

5. Système de commande selon la revendication 4, caractérisé par
   - une activation du dispositif de réglage additionnel (15.3) en vue du rabattement d'un des rétroviseurs extérieurs (15) lors de l'actionnement de la poignée (2) amenée dans la quatrième position de commutation (ADD) dans un sens d'actionnement (o),
   - une activation du dispositif de réglage additionnel (17.3) en vue du rabattement de l'autre rétroviseur extérieur (17) lors de l'actionnement de la poignée (2) amenée dans la quatrième position de commutation (ADD) dans un autre sens d'actionnement (u), et
   - une activation des dispositifs de réglage additionnels (15.3,17.3) en vue d'un écartement des deux rétroviseurs extérieurs (15,17) par rapport à la carrosserie du véhicule lors d'un actionnement de la poignée (2) amenée dans la quatrième position de commutation (ADD) dans un troisième sens d'actionnement (r).

6. Système de commande selon l'une des revendications 1 à 4, dans lequel un circuit de décodage et de commande (DEC) pour le réglage de rétroviseurs, relie aux bornes de connexion de l'ensemble de commutateurs (1), constitue une partie du circuit de mémoire (MEM) de positions de rétroviseurs, caractérisé par une mémorisation d'une position de rétroviseur, réglée auparavant au moyen de la poignée (2) et captée électriquement par des capteurs de positions (18), dans le circuit de mémoire (MEM) seulement lors d'un actionnement de la poignée (2), amenée dans la quatrième position de commutation (ADD), dans un sens prédéterminé (r), une sélection de l'emplacement de mémorisation à occuper dans le circuit de mémoire (MEM) s'effectuant alors par l'intermédiaire d'un clavier à touches séparé (KEY).

7. Système de commande selon l'une des revendications précédentes, comportant une poignée (2) agencée en forme d'aiguille.

8. Système de commande selon l'une des revendications précédentes, comportant pour représenter la position de la poignée (2) un symbole (4) disposé dans cette poignée et pouvant être éclairé par une source lumineuse (5).

# Fig. 1

# Fig. 2